(19) Europäisches Patentamt
European Patent Office
Office européen des brevets

(11) **EP 4 216 156 A1**

(12) **EUROPEAN PATENT APPLICATION**

(43) Date of publication:
**26.07.2023 Bulletin 2023/30**

(21) Application number: **22152943.1**

(22) Date of filing: **24.01.2022**

(51) International Patent Classification (IPC):
***G06T 7/00*** *(2017.01)*

(52) Cooperative Patent Classification (CPC):
**G06T 7/0016;** G06T 2207/10076;
G06T 2207/10081; G06T 2207/10096;
G06T 2207/10132; G06T 2207/20036;
G06T 2207/20081; G06T 2207/30056;
G06T 2207/30096

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **MYSORE SIDDU, Dinesh
Eindhoven (NL)**

• **PANDYA, maulik yogeshbhai
Eindhoven (NL)**
• **PALANISAMY, Krishnamoorthy
Eindhoven (NL)**
• **PAWAR, Anil
Eindhoven (NL)**
• **RAJA, Karthick
Eindhoven (NL)**
• **SUSAIYAH, Allmin Pradhap Singh
Eindhoven (NL)**

(74) Representative: **Philips Intellectual Property &
Standards
High Tech Campus 52
5656 AG Eindhoven (NL)**

(54) **ANALYSING LIVER LESIONS IN MEDICAL IMAGES**

(57) According to an aspect, there is provided a method of determining whether a liver lesion has one or more lesion characteristics in a first contrast image of a liver. The method comprises: determining first attributes in an inner region of the lesion in the first contrast image and second attributes in a region exterior to the lesion in the first contrast image. The method further comprises using a model trained using a machine learning process to obtain an indication of whether the lesion has the one or more lesion characteristics, based on the first attributes and the second attributes.

Fig. 2

**EP 4 216 156 A1**

**Description**

FIELD OF THE INVENTION

This disclosure relates to analyzing medical images of liver lesions. In particular, but non-exclusively, embodiments herein relate to determining whether a liver lesion has one or more lesion characteristics in contrast images of the liver.

BACKGROUND OF THE INVENTION

The Liver Imaging Reporting and Data System (LI-RADS) score is used to standardize the reporting of Computed Tomography (CT), Magnetic resonance (MR) and more recently Ultrasound (US) imaging of patients at risk for hepatocellular carcinoma (HCC). LI-RADS is described in detail in the paper by Chernyak V, Santillan CS, Papadatos D, Sirlin CB entitled: "LI-RADS® algorithm: CT and MRI"; Abdom Radiol (NY) 2018;43(1): 111-126; see also "The LI-RADS® v2018 Manual" by Bashir et al. 2018 issued by the American College of Radiology (ACR). LI-RADS scores liver lesions (e.g. tumors) on a 5-point scale that attempts to capture the severity and likelihood of a lesion being HCC. In clinical practice, an important threshold is reached when a tumor is characterized as a LI-RADS category 4 or LI-RADS category 5 which recommends an intervention. At LI-RADS category 3, the patient is in a watchful waiting stage, which in the cases of tumors that eventually become aggressive, can be viewed as time that has elapsed where an earlier intervention may have increased the likelihood of successful treatment (e.g. liver transplant). In clinical practice, characterizing a lesion as LR3 vs. LR4 can be a subjective clinical decision with moderate inter-observer variability. Tumors in LI-RADS category 3 eventually progress to LI-RADS category 4 and 5. Typically, patients show up for diagnosis at a very late stage of liver cancer (Hepatocellular carcinoma (HCC) stage 4). 5-year survival reduces considerably with disease stage progression e.g.: Stage 1: 60%, stage 2: 40%, stages 3 & 4: 20%, Stage 5: less than 10%. Hence, accurate and timely LI-RADS scoring for HCC tumors provides a useful measure for treatment planning in order to treat cancer lesions from an early stage to very critical stage with better prognosis.

Manually determining LI-RADS scores for cancer lesions in CT studies is often perceived as laborious, difficult and complex to interpret. The LI-RADS score for a liver lesion is allocated based on presence (or absence) of various lesion characteristics, such as hyper-enhancement, hypo-enhancement, a capsule, and/or washout that have to be assessed by comparing different images in different phase contrasts. It can be cumbersome to manually navigate between different contrast image phases to examine lesions using an image viewer. For this reason, adoption of LI-RADS in regular clinical practice is hampered.

SUMMARY OF THE INVENTION

As described above, the LI-RADS score is used to diagnose and categorize liver lesions and can be used in treatment planning. Adoption of the LI-RADS scoring system is hampered however, as it is often perceived to be difficult to manually determine the LI-RADS score for a lesion. Embodiments herein aim to address this issue, amongst others.

Thus, according to a first aspect, there is provided a method of determining whether a liver lesion has one or more lesion characteristics from a first contrast image of a liver. The method comprises: determining first attributes in an inner region of the lesion in the first contrast image, determining second attributes in a region exterior to the lesion in the first contrast image; and using a model trained using a machine learning process to obtain an indication of whether the lesion has the one or more lesion characteristics, based on the first attributes and the second attributes.

According to a second aspect, there is a computer program product comprising a computer readable medium, the computer readable medium having computer readable code embodied therein, the computer readable code being configured such that, on execution by a suitable computer or processor, the computer or processor is caused to perform the method of the first aspect.

According to a third aspect, there is an apparatus for determining whether a liver lesion has one or more lesion characteristics in a first contrast image of the liver. The apparatus comprises: a memory comprising instruction data representing a set of instructions; and a processor configured to communicate with the memory and to execute the set of instructions. The set of instructions, when executed by the processor, cause the processor to: determine first attributes in an inner region of the lesion in the first contrast image, determine second attributes in a region exterior to the lesion in the first contrast image; and use a model trained using a machine learning process to obtain an indication of whether the lesion has the one or more lesion characteristics, based on the first attributes and the second attributes.

Thus, embodiments herein use attributes of regions within the lesion and exterior to the lesion as inputs to a machine learning model in order to determine the presence of lesion characteristics that can be used to determine the LI-RADS score.

These and other aspects will be apparent from and elucidated with reference to the embodiment(s) described hereinafter.

BRIEF DESCRIPTION OF THE DRAWINGS

Example embodiments will now be described, by way of example only, with reference to the following drawings, in which:

Fig. 1 is an example apparatus according to some embodiments herein;

Fig. 2 is an example method according to some embodiments herein;

Fig. 3 shows an example inner region, region exterior to and boundary region for an example lesion;

Fig. 4 shows an example method according to some embodiments herein;

Fig. 5 shows example lesions with hypo- and hyper-enhancement;

Fig. 6 shows example lesions with capsules;

Fig. 7 a shows an illustration of a lesion with a capsule;

Fig. 7b shows an illustration of a lesion without a capsule;

Fig. 7c shows an illustration of how the image in Fig. 7a may be linearized;

Fig. 7d shows an illustration of how the image in Fig. 7d may be linearized;

Fig. 8 illustrates a method of transforming a lesion image into linearized form according to some embodiments;

Fig. 9 illustrates images, masks and linearized versions of two lesions;

Fig. 10 illustrates a method of transforming an image of an irregularly shaped lesion into linearized form according to some embodiments;

Fig. 11 shows an example method according to some embodiments herein; and

Fig. 12 shows example image slices pre-and post-image registration.

## DETAILED DESCRIPTION OF EMBODIMENTS

As described above, the LI-RADS score is used to diagnose and categorize liver lesions and can be used in treatment planning. Adoption of the LI-RADS scoring system is hampered however, as it is often perceived to be difficult to manually determine the LI-RADS score for a lesion. Embodiments herein aim use attributes of regions within the lesion and exterior to the lesion as inputs to a machine learning model in order to determine the presence of lesion characteristics that can be used to determine the LI-RADS score in an automated and reliable manner.

Machine learning has been used in previous studies to predict LI-RADS scores, however these studies tend to input (just) the full images to the machine learning models therein.

Herein, attributes such as radiomics features and/or statistical measures (e.g. such as the min, max, mean and/or range) of the intensity values of voxels/pixels in the interior and exterior of the lesion are provided to the model as input. Lesion characteristics such as APHE, washout and presence of a capsule are diagnosed according to differences between the attributes of the interior and exterior of the lesion. Thus, embodiments herein provide more targeted input parameters to the model to better predict the presence (or absence) of lesion characteristics. Furthermore, rather than use a machine learning model to predict a LI-RADS score directly from the images, embodiments herein break the task down to smaller tasks (e.g. predicting the presence of lesion characteristics). This improves the prediction of each task, and reduces the amount of training data needed (e.g. less training data is needed to predict the presence of a lesion characteristic, compared to the broader task of predicting a LI-RADS score outright). The improved lesion characteristics predictions can be used to improve the calculation of the LI-RADS score and provide automated, accurate LI-RADS scores for lesions.

More generally, an automated, reliable method of computing a LI-RADS score can lead to faster reporting of critical findings, lower rescan rates, more uniformity in images, clearer actionable reports for the referrer, and enhanced patient treatment outcomes.

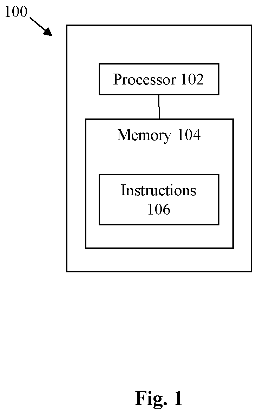

In more detail, turning now to Fig. 1 in some embodiments there is an apparatus 100 for use in determining whether a liver lesion has one or more lesion characteristics in a first contrast image of a liver, according to some embodiments herein. Generally, the apparatus may form part of a computer apparatus or system e.g. such as a laptop, desktop computer or other computing device. In some embodiments, the apparatus 100 may form part of a distributed computing arrangement or the cloud.

The apparatus comprises a memory 104 comprising instruction data representing a set of instructions 106 and a processor 102 (e.g. processing circuitry or logic) configured to communicate with the memory and to execute the set of instructions. Generally, the set of instructions, when executed by the processor, may cause the processor to perform any of the embodiments of the method 200 as described below.

Embodiments of the apparatus 100 may be for use in determining whether a liver lesion has one or more lesion characteristics in a first contrast image of a liver. More specifically, the set of instructions, when executed by the processor, cause the processor to: determine first attributes in an inner region of the lesion in the first contrast image, determine second attributes in a region exterior to the lesion in the first contrast image; and use a model trained using a machine learning process to obtain an indication of whether the lesion has the one or more lesion characteristics, based on the first attributes and the second attributes.

The processor 102 can comprise one or more processors, processing units, multi-core processors or modules that are configured or programmed to control the apparatus 100 in the manner described herein. In particular implementations, the processor 102 can comprise a plurality of software and/or hardware modules that are each configured to perform, or are for performing, individual or multiple steps of the method described herein. The processor 102 can comprise one or more processors, processing units, multi-core processors and/or modules that are configured or programmed to control the apparatus 100 in the manner described herein. In some implementations, for example, the processor 102 may comprise a plurality of (for example, interoperated) processors, processing units, multi-core processors and/or modules configured for distributed processing. It will be appreciated by a person skilled in the art that such processors, processing units, multi-core processors and/or modules may be located in different locations and may perform different steps and/or different parts of a single step of the method described herein.

The memory 104 is configured to store program code that can be executed by the processor 102 to perform the method described herein. Alternatively, or in addition, one or more memories 104 may be external to (i.e. separate to or remote from) the apparatus 100. For example, one or more memories 104 may be part of another device. Memory 104 can be used to store the first contrast image, the model, the indication and/or any other information or data received, calculated or determined by the processor 102 of the apparatus 100 or from any interfaces, memories or devices that are external to the apparatus 100. The processor 102 may be configured to control the memory 104 to store the first contrast image, the model, the indication and/or the any other information.

In some embodiments, the memory 104 may comprise a plurality of sub-memories, each sub-memory being capable of storing a piece of instruction data. For example, at least one sub-memory may store instruction data representing at least one instruction of the set of instructions, while at least one other sub-memory may store instruction data representing at least one other instruction of the set of instructions.

It will be appreciated that Fig. 1 only shows the components required to illustrate this aspect of the disclosure and, in a practical implementation, the apparatus 100 may comprise additional components to those shown. For example, the apparatus 100 may further comprise a display. A display may comprise, for example, a computer screen, and/or a screen on a mobile phone or tablet. The apparatus may further comprise a user input device, such as a keyboard, mouse or other input device that enables a user to interact with the apparatus, for example, to provide initial input parameters to be used in the method described herein. The apparatus 100 may comprise a battery or other power supply for powering the apparatus 100 or means for connecting the apparatus 100 to a mains power supply.

The skilled person will be familiar with contrast images, otherwise known as contrast enhanced images whereby a contrast agent, or dye is injected by the patient before image acquisition. The contrast agent flows through the patient, and appears brighter in the acquired images, thus highlighting the structures it passes through. As an example, the first contrast image may be a contrast CT image (or "contrast enhanced computed tomography", CECT image). In contrast CT images, a radio-contrast agent, such as an iodine-based contrast is injected into the patient before the CT image is taken.

This enables structures such as blood vessels to be highlighted that would otherwise be difficult to see.

Contrast images can be taken in a range of image modalities, for example, the contrast image may also be a contrast US image, a contrast MRI image, or any other contrast image.

Contrast images can be obtained at different times (or phases) after admission of the contrast agent. For example, in CT scans, there are arterial, portal venous and delay phases (amongst others). In the early arterial phase, the contrast agent is still in the arteries and has not reached the organs and other soft tissues. In the late arterial phase, there is an optimal enhancement of structures that get their blood supply directly from the arterial system. The portal venous phase is characterized by the portal and hepatic veins being completely enhanced, and the liver parenchyma also being at its peak enhancement. The delayed phase refers to a late phase scan, that may, for example, be obtained from a few minutes, to up to fifteen minutes following admission of the contrast agent.

Generally, the first contrast image may be an arterial contrast image, a portal venous contrast image, a delayed contrast image or a contrast image taken at any other image phase.

The first contrast image may be a two-dimensional (2D) image or a three-dimensional (3D) image. The first contrast image is made up of image components. As used herein, an image component refers to a pixel in a two-dimensional image or a voxel in a three-dimensional image.

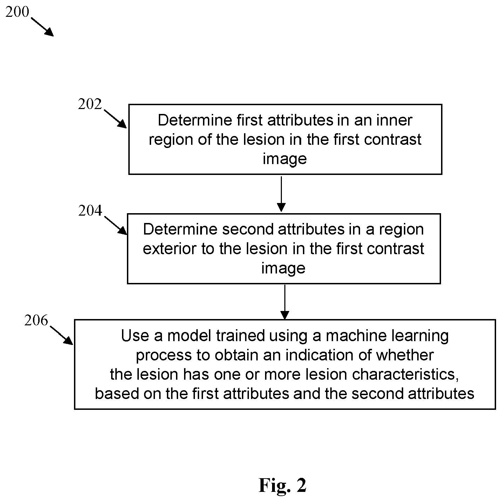

Turning now to Fig. 2, there is a computer implemented method 200 for use in determining whether a liver lesion has one or more lesion characteristics in a first contrast image of a liver. Embodiments of the method 200 may be performed, for example by an apparatus such as the apparatus 100 described above.

Briefly, in a first step 202, the method 200 comprises: determining first attributes in an inner region of the lesion in the first contrast image. In a second step 204 the method comprises determining second attributes in a region exterior to the lesion in the first contrast image. In a third step 206 the method comprises using a model trained using a machine learning process to obtain an indication of whether the lesion has the one or more lesion characteristics, based on the first attributes and the second attributes.

In more detail, as described above, in step 202, first attributes (e.g. a first set or plurality of attributes) are determined in an inner region of the lesion in the first contrast image. In step 204, second attributes (e.g. a second set or plurality of attributes) are determined in a region exterior to the lesion in the first contrast image are also determined.

The inner region of the lesion is a region within the boundaries of the lesion in the image. It will be appreciated that if the first contrast image is a 2D image, then the inner region may be a 2D region, whereas if the first contrast image is a 3D image, then the inner region may be a volume. Any region within (e.g. fully encompassed by) the lesion may be selected and used as the inner region. For example, the inner region may be a region centered on the core of the lesion. The inner region may be shrunk compared to the boundary or contour of the lesion.

The region exterior to the lesion may be volume, or strip surrounding the lesion, e.g. around the edge of the lesion and following the contour of the outer edge of the lesion. The region exterior to the lesion may border the edge of the lesion. In some embodiments, the region exterior to the lesion may bounded by two concentric rings or surfaces defined beyond the boundary of the segment. It will be appreciated that if the first contrast image is a 2D image, then the region exterior to the segment may be a 2D region, whereas if the first contrast image is a 3D image, then the region exterior to the segment may be a volume.

The boundary (or contour) of the lesion may be determined in the first contrast image using segmentation. As such, step 202 may comprise segmenting the first contrast image to obtain a segment of the lesion in the first contrast image. In other words, to obtain a segment or contour corresponding to the lesion in the first contrast image. The skilled person will be familiar with segmentation (e.g. image segmentation), but in brief, segmentation involves extracting shape/form information about the objects or shapes captured in an image. This may be achieved by converting the image into constituent blocks or "segments", where the pixels or voxels assigned to each segment have a common attribute. For example, segmentation may involve outlining (e.g. creating contours of) the structures in the medical image, labelling image components according to the structure to which they correspond and/or adding color or texture to different structures in the medical image. Segmentation may be performed using machine learning (ML) models, some examples of which are described in the paper by S. Minaee, Y. Y. Boykov, F. Porikli, A. J. Plaza, N. Kehtarnavaz and D. Terzopoulos, "Image Segmentation Using Deep Learning: A Survey," in IEEE Transactions on Pattern Analysis and Machine Intelligence, doi: 10.1109/TPAMI.2021.3059968. Segmentation may also be performed using other techniques such as model based segmentation processes.

In some embodiments, the inner region of the lesion and the region exterior to the lesion in the first contrast image are defined relative to the segment of the lesion. For example, the region exterior to the lesion may be obtained by using morphological dilation of the segment of the lesion to obtain a (first) dilated segment and defining the region exterior to the lesion as the residual of the segment of the lesion subtracted from the dilated segment. In other words, the region exterior to the lesion may be defined based on a morphological expansion of the lesion. The skilled person will be familiar with morphological dilation, e.g. proportional expansion of a shape.

As an example, by experimentation, a 1mm expansion by morphological dilation has been found to be an appropriate value, however it will be appreciated that the scale factors for the morphological dilations and/or morphological erosions herein may be a configurable parameter that may be optimally tuned (by experimentation) based on the particular application.

In another example, the region exterior to the lesion may be positioned with a gap between the outer edge of the segment and the beginning of the region exterior to the lesion. In other words, the region exterior to the lesion may be removed from the region boundary. For example, another (e.g. second) dilated segment may be defined, with a smaller scale factor than the first dilated segment. The region exterior to the lesion may thus be defined as the residual of the second dilated segment from the first dilated segment.

The inner region of the lesion may be defined using morphological erosion of the segment of the lesion to define an eroded segment. Such an eroded segment may then be used as the inner region of the lesion. In other words, the inner region may be defined as a morphological erosion of the lesion. The skilled person will also be familiar with morphological erosion of a shape, e.g. proportional shrinking of a shape.

As described in more detail below, in some embodiments herein, a boundary region of the lesion is also used. For example, the method 200 may further comprise obtaining further attributes in a boundary region and the step of using 206 a model to obtain an indication of whether the lesion has the one or more lesion characteristics may further be based on the further attributes. A boundary region (or penumbra region) as used herein, encompasses the edge of the segment. A boundary region may be defined from a segment of the lesion by subtracting the eroded segment above from the second dilated segment. In other words, a boundary region may be defined as a region between the morphological expansion of the lesion and the morphological erosion of the lesion (as described above).

When defined with respect to the segment, the region exterior to the segment may be described as an outer mask and the inner region may be described as an inner mask.

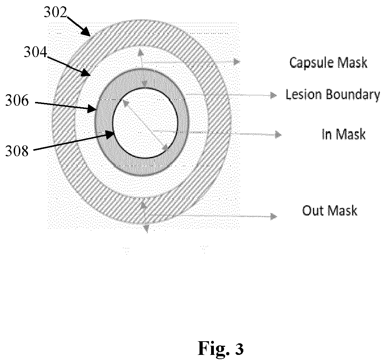

An example inner region, region exterior to the lesion and boundary region are illustrated with respect to Fig. 3 which shows a segment of a lesion, illustrated by the contour 306. A (first) dilated segment 302 and a second dilated segment 304 are defined using morphological dilation of contour 306. In some embodiments, the region exterior to the lesion is defined as the region (or in 3D, the shell) between contours 302 and 304. Contour 308 illustrates an eroded segment with respect to the contour 306 and this may be used as the inner region. A boundary region may be defined as the region (or in 3D the shell) between contours 308 and 304.

In steps 202 and 204 of the method 200, after determining the inner region and the region exterior to the segment, the first and second attributes are determined (or calculated). The attributes may be attributes of the intensity values of the image components (e.g. pixels/voxels) in the respective regions. For example, the attributes may be related to the distribution of intensity values of the image components in each respective region.

Examples of attributes include, but are not limited to radiomics features and statistical measures of the (intensity values of) image components in the respective regions. Radiomics features include, but are not limited to: size and shape based-features, descriptors of an image intensity histogram for the region, descriptors of the relationships between image voxels (e.g. gray-level co-occurrence matrix (GLCM), run length matrix (RLM), size zone matrix (SZM), and neighborhood gray tone difference matrix (NGTDM) derived textures, textures extracted from filtered images, and fractal features. Statistical measures include, but are not limited to: a max, min, mean, median, variance, standard deviation, or any other statistical quantity that can be calculated for the image components (pixels/voxels) in a region.

In one embodiment, in steps 202 and 204, an Energy, Interquartile Range, Kurtosis, Maximum Diameter, Mesh Volume, Minor Axis Length, and Sphericity of the respective regions may be calculated. These attributes have been found to be an appropriate set of attributes to measure in each region and provide as input to the model. The skilled person will appreciate however that this is merely an example, and that a wide range of attributes and/or combinations of attributes may equally be used.

The first attributes may be a tuple of values of a plurality of different measures for the inner region. The second attributes may be an equivalent tuple of values, e.g. comprising the same types of attributes) for the region exterior to the segment. Furthermore, in some embodiments, third attributes may be obtained for a boundary region. The third attributes may be an equivalent tuple of values for the boundary region.

In step 206, the method then comprises using a model trained using a machine learning process to obtain an indication of whether the lesion has one or more lesion characteristics, based on the first attributes and the second attributes. As noted above, lesion characteristics include, but are not limited to APHE, washout, hypo-enhancement and presence of a capsule.

APHE (Hyper Enhancement) is non-rim arterial phase hyper-enhancement of a lesion which is greater than the enhancement of the surrounding liver. In other words, APHE is characterized in that the lesion appears brighter compared to the surrounding liver tissues.

Hypo-enhancement is where the lesion intensity is lower compared to the surrounding liver tissues.

Washout is characterized in a non-peripheral visually assessed temporal reduction in enhancement of the whole or in part, relative to the composite liver tissue from earlier to later phase. This results in hypo-enhancement in the extracellular phase.

Capsule is characterized by a peripheral rim of smooth hyper-enhancement in the portal venous phase or delayed phase that is thicker or more conspicuous than the rims surrounding background nodule.

The skilled person will appreciate that these are merely examples, and that other lesion characteristics could equally be determined using the method 200, such as, for example, non-enhancing capsule, nodule in nodule architecture, mosaic architecture, and/or fat in mass (more than adjacent liver).

In some embodiments, the first and second attributes are provided as input to the model and the model provides as output the indication of whether the lesion has the one or more lesion characteristics.

In other words, a model may be trained using a machine learning process to predict whether a lesion has lesion attributes such as APHE, capsule and washout based on input statistics of the image component values in regions inside, outside (and/or in a boundary region of) the lesion.

In some embodiments, a single model may be trained to predict whether an individual characteristic is present. As such, there may be a plurality of models, each trained to predict an individual characteristic. For example, one model may be trained to predict washout, another may be trained to predict APHE and another may be trained to predict whether there is a capsule.

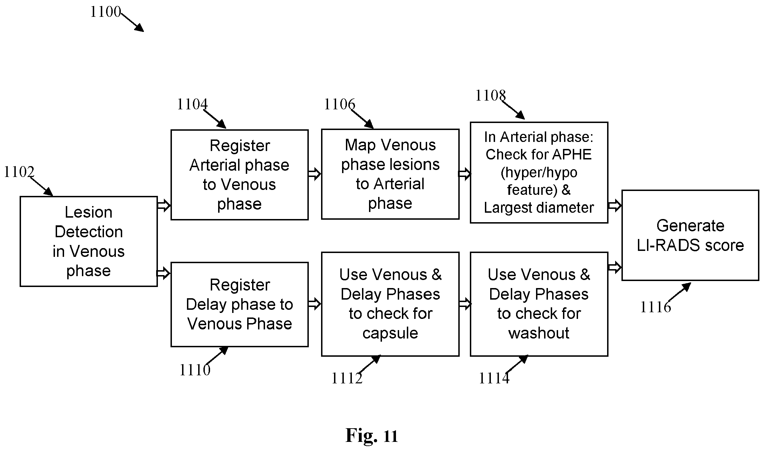

In some embodiments, the model may be a classification model and the indication may indicate whether the lesion has the one or more lesion characteristics. For example, the model may output a binary indication (or a tuple of binary indications). As such, and as illustrated in Fig. 11 (described in detail below), in some embodiments there may be a plurality of binary classification models, each for predicting/determining the presence of a different characteristic in a different (combination) of contrast images. In such an embodiment, the method 200 may be repeated for each of the plurality of image characteristics.

As described above, the use of classification models in this way is advantageous for various reasons. Firstly, training classification models can require less samples to attain a particular predictive accuracy level, compared to methods that train an end-to-end deep learning model which directly predicts the LI-RADS score from the images. Furthermore, the approach described herein of training different classification models for different characteristics, allows hand crafted features to be selected which better meet (or target) the accepted definition of the LI-RADS characteristics.

Furthermore, in the approach herein, several intermediate characteristic results can be provided along with the LIRADS score, which can be of use to clinicians in their decision making process. The process herein is in-line with the way clinicians assess LI-RADS scoring and thus, the results are more explainable to clinicians by providing characteristic evidence such as APHE, Washout, Capsule and diameter information. This explainability and transparency, helps to build clinical confidence in the system, thus improving adoption in clinical practice.

The skilled person will be familiar with machine learning models and machine learning processes. For example, the model may be a neural network or a random forest model.

Random Forest Classifiers provide increased flexibility to tune hyper parameters such as the number of decision trees, split criteria, maximum depth of the individual trees, maximum number of leaf nodes, etc. This can lead to improved accuracy compared to other machine learning model types.

The machine learning process may be a supervised learning process. For example, a neural network may be trained to predict the lesion characteristics from the first attributes and the second attributes, using training data comprising example first and second attributes for examples images that have been labelled with their correct (e.g. ground truth) indications. A neural network may be trained, for example, using machine learning processes such as back-propagation and gradient-descent. Various open source training tools may be used to train a model to perform the tasks described herein. As an example, the Sci-kit learn open source libraries may be used, as described in the following paper: "Scikit-learn: Machine Learning in Python", Pedregosa et al., JMLR 12, pp. 2825-2830, 2011. The skilled person will appreciate the importance of providing a sufficiently large and varied annotated training data set in order to obtain a model of a desired accuracy across a desired range of input parameter space.

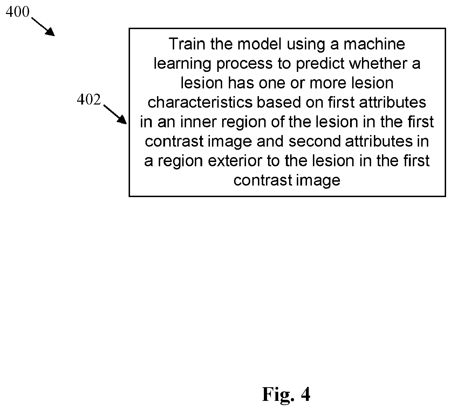

According to some embodiments, as illustrated in Fig. 4, there is a method 400 of training a machine learning model to analyze a lesion in a first contrast image of a liver. The method comprises training 402 the model using a machine learning process to predict whether a lesion has one or more lesion characteristics based on first attributes in an inner region of the lesion in the first contrast image and second attributes in a region exterior to the lesion in the first contrast image. The step of training may comprise training the model to take the first attributes and the second attributes as input and output the indication. The step of training may be performed using a supervised learning method using training data comprising a plurality of training examples. Each training example may comprise: example first attributes in an inner region of an example lesion in an example contrast image and second attributes in a region exterior to the example lesion in the example contrast image.

It will be appreciated that other inputs and/or outputs are also contemplated to those described above. For example, as described below, in some embodiments, the model may further be trained to take as input third attributes in an inner region of a second contrast image and/or fourth attributes in a region exterior to the lesion in the second contrast image. As another example, also described below, in some embodiments, the model may further be trained to take as input fifth attributes in a boundary region of the lesion in the first contrast image and/or sixth attributes in a boundary region of the lesion in the second contrast image.

As another example, the model may further be trained to take the first contrast image as input. Providing the first contrast image in addition to the first and second attributes provides additional input to the model with which to make the predictions and may improve the accuracy of the outputs further.

Furthermore, the outputs may be different, or in a different format to those in the examples above. For example, the model may be trained to output a list of lesion characteristics predicted for the lesion as the indication; a list of binary indications corresponding to the presence of particular lesion characteristics; a LI-RADS score; or any other type of indication of whether the lesion characteristics are predicted to be present for the lesion.

Turning now to other embodiments, in some examples, the first contrast image is an arterial phase image and the one or more lesion characteristics comprise arterial phase hyperenhancement, APHE. In other words, it has been appreciated herein that APHE can be predicted based on attributes of the image components in inner and exterior regions of the lesion in an arterial phase contrast image.

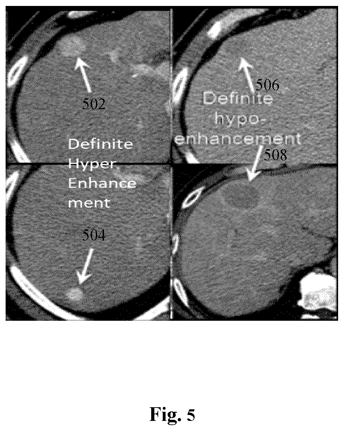

Fig. 5 shows four example lesions, in delayed phase contrast CT images. Lesions 502 and 504 are hyper enhanced, while lesions 506 and 508 are hypo enhanced compared to the background tissue.

In some embodiments, attributes from more than one contrast image may be input to the model (e.g. the model may be trained to take additional inputs comprising attributes measured in a second contrast image). For example, the method 200 may further comprise determining third attributes in an inner region of the lesion in a second contrast image at a different contrast phase to the first contrast image, and fourth attributes in a region exterior to the lesion in the second contrast image. The step of using a model trained using a machine learning process may then be further based on the third attributes and the fourth attributes.

Where a second contrast image is used, the method 200 may further comprise registering the first and second contrast images to align the lesion between images. The inner region and the region exterior to the lesion may then be the same (e.g. cover the same or equivalent area/volume) in both images.

As an example, the lesion characteristic "washout" may be predicted from attributes obtained in two contrast images of different phases. For example, features (attributes) from the inner and outer mask of either Portal Venous Phase and the Delayed Phase contrast images, or Arterial and Portal Venous phase contrast images.

For washout, these combinations of images and attributes work well because they target the characteristics of washout, e.g. that washout is temporal reduction in lesion voxel intensities. Thus, this combination of inputs capture the information on contrast uptake from lesions at different phases.

Put another way, in some embodiments, where the one or more lesion characteristics is washout, the first contrast image may be an arterial phase image, and the second contrast image may be a portal venous image. In another example where the one or more lesion characteristics is washout, the first contrast image can be a portal venous image, and the second contrast image can be a delayed image. Alternatively, attributes of all three contrast images (portal venous, arterial and delayed) in the inner regions and regions exterior to the lesion may be provided as input to the model to obtain an indication of washout.

As described above, in some embodiments, in addition to attributes of the inner region and the region exterior to the lesion, attributes in a boundary region may also be obtained. Attributes in the boundary region may be used, for example, to predict the presence of the capsule lesion characteristic (e.g. whether the lesion has a capsule).

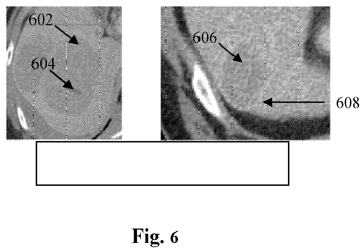

Examples of Lesions with capsules are illustrated in Fig. 6. The left hand panel of Fig. 6 shows a liver lesion 602 and associated capsule 604. The right hand panel of Fig. 6 shows another liver lesion 606 and capsule 608.

Attributes obtained in a boundary region (encompassing the edge/contour of the lesion) help to identify the presence of a capsule because capsules are located in boundary regions and can thus be identified by changes in intensity between the boundary/capsule, the inner region and the region exterior to the lesion.

Thus, in some embodiments, the method 200 comprises determining fifth attributes in a boundary region of the lesion in the first contrast image and sixth attributes in a boundary region of the lesion in the second contrast image. In such embodiments, the step of using a model trained using a machine learning process is further based on the fifth attributes and the sixth attributes.

As noted above, the fifth and sixth attributes may be used, for example, where the one or more lesion characteristics is presence of a capsule. In such an example, the first contrast image may be a portal venous image, and the second contrast image may be a delayed image.

In some embodiments, where the lesion characteristic is capsule, the contrast images may be transformed (e.g. converted) into a linearized form before performing the method 200 described above. Linear image representations can be used to convert the complex mostly circular structure of a lesion into a linear form, e.g. a sequence of bands.

This transformation can be simultaneously performed on all three contrast images, e.g. as part of a registration procedure. However, the linearization can also be performed on individual contrast images and subsequently combined.

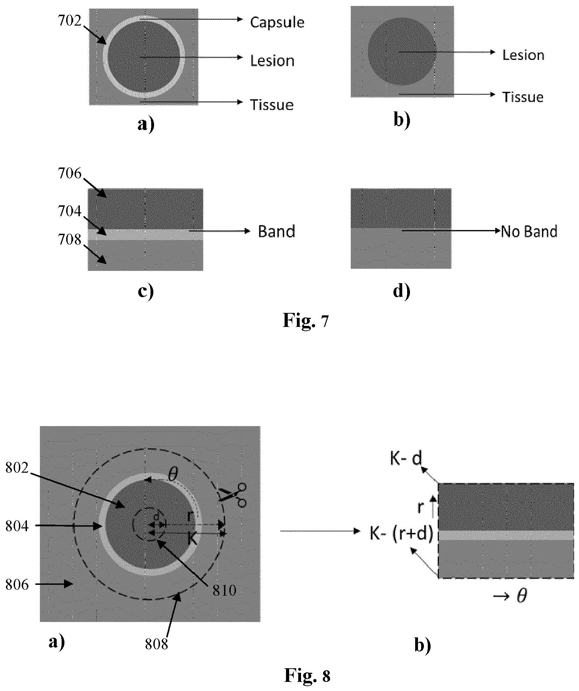

Turning to Fig. 7, which illustrates a transformation performed on two example lesions as would be seen in a portal venous or delay phase contrast image. The first lesion illustrated in Fig. 7a has a capsule 702 and the second lesion illustrated in Fig. 7b, does not have a capsule. The capsule 702 in Fig. 7a is a thin bright band around the lesion. Capsules can be difficult to recognize, even for expert radiologists. However, this task can be made easier by linearizing the image in Fig. 7a into a straighter form as shown in Fig. 7c. In Fig. 7c, the circular rim 702 shown in Fig. 7a is flattened to a band like structure 704. In this example, the region above the band 706 represents pixels from within the lesion boundary and the region below the band 708 is the liver parenchyma. A lesion without a capsule is illustrated in Fig. 7b and the linearized form of the non-capsule lesion is illustrated in Fig. 7d which only shows two bands (instead of the three shown in the presence of a capsule). By linearizing the lesion images in this way, the problem of distinguishing between capsule and non-capsule image as shown in Fig. 7a-d is reduced from detecting rings to detecting bars.

Linearization of uniform boundary lesions - Cartesian to polar mapping:

If the lesion is near circular, then a cartesian to polar mapping may be performed. In this, the Cartesian coordinates of the image are mapped to polar coordinates using a mapping function. Transforming the image in this manner gives an appearance like the lesion was cut out across two concentric circles 808, 810 and stretched to form a rectangle as shown in Fig. 8 which illustrates the linearization process. Fig. 8 shows a lesion 802 with a capsule 804 surrounded by ordinary tissue 806. Here the values d and K denote the radius of the inner circle 810 (corresponding to the inner region) and outer circle 808 (corresponding to the region exterior to the lesion) respectively.

The K and d values may be set at a fixed distance from the boundary, the values of k and d may be configurable. As described above, the boundary may be determined e.g. using segmentation techniques.

Each pixel in the output image (e.g. the transformed contrast image) Io is represented as Io($\theta$,r) where $\theta$ is the x coordinate and r is the y coordinate. The X and Y coordinates of the input image that fills Io($\theta$,r) is given by the following formula:

$$x(\theta, r) = (K-(r+d))* \cos(\theta)$$

$$y(\theta, r) = (K-(r+d))* \sin(\theta)$$

In other words, the method 200 may comprise:

i) transforming the first contrast image, the second contrast image and/or the third contrast image by mapping the cartesian co-ordinates of the respective images into polar coordinates so as to convert the circular structure of the lesion into a linearized form in each respective contrast image. The method 200 may then comprise ii) defining the inner region, the region exterior to the lesion and the boundary region with respect to bands visible in the linearized form of the lesion in each respective image. Thus in a pre-processing step, the images may be transformed so as to represent a circular lesion as a sequence of bands or stripes.

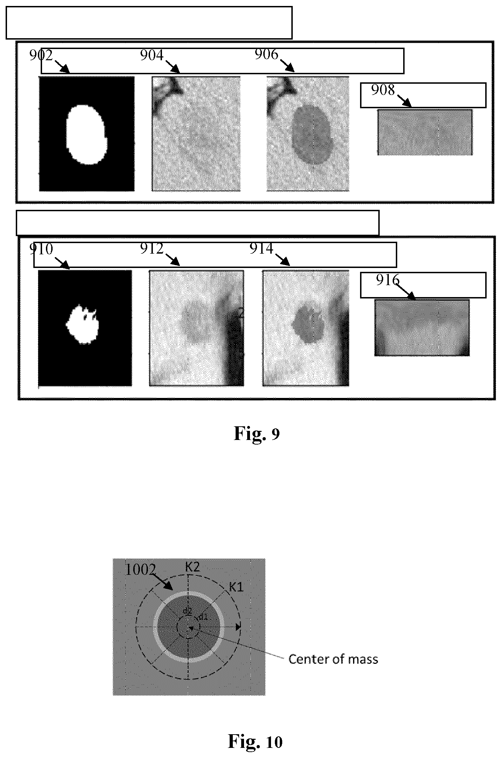

Some example linearized lesion images are given in Fig. 9. The top panel illustrates an image 904 of a lesion without a capsule; the mask (e.g segment) for the lesion in image 902; an image 906 of the lesion overlaid with the mask 902; and the linearized version of the lesion image in 908. The lower panel illustrates an image 912 of a lesion with a capsule. Image 910 shows a mask for the lesion in image 912; image 914 illustrates the lesion image overlain with the mask 910 and image 916 shows the linearized version of the image 912. From these images, it can be seen how linearization has enhanced the visual ability to detect capsules.

Linearization for irregularly shaped lesions - Curvature based mapping:

If the curvature of the lesion is not uniform at all angles, e.g. if the lesion is not approximately spherical/circular, then the image may be split into sectors 1002 originating from its center of mass as shown in Fig. 10. A sector otherwise known as a circular sector is a wedge or segment of the lesion, defined between two spokes k1 and k2 coming radially from the center of the lesion. Although the lesion in Fig. 10 is illustrated as being relatively circular, it will be appreciated that this is merely for illustrative purposes and that real lesions may be irregular in shape.

For each circular sector, the inner and outer boundary may be decided using morphological erosion and dilation on binary mask of the lesion.

Each of these sections is linearized as above, using steps i) and ii), but, K and d are different for each section as the lesion is irregularly shaped. Also, the values of d and K may be calculated from the center of curvature of the boundary with lesser radius. This will differ for each section.

In other words, in some embodiments, the method 200 may comprise: splitting the lesion into circular sectors; and for each circular sector: performing steps i) and ii) for portions of the respective images corresponding to the respective circular segment. The inner region, the region exterior to the lesion and the boundary region may thus be defined individually for each circular segment with respect to bands visible in the linearized form of the lesion in each respective image.

As noted above, linearization of the contrast images can make it easier to define the inner region, the region exterior to the lesion and the outer region in the images as in the linearized form, the generally spherical (or in 2D circular) form of the lesion is converted into bands which simplifies the processing.

The following summarizes some of the examples given above:

Lesion Characteristic: APHE
First contrast image phase: arterial
Inputs to model: first attributes from inner region and second attributes from region exterior to the lesion.
Lesion Characteristic: Washout
First contrast image phase: arterial
Second contrast image phase: portal venous
Inputs to model: first attributes from inner region of the arterial contrast image; second attributes from region exterior to the lesion in the arterial contrast image; third attribute from inner region of the portal venous contrast image; fourth attributes from region exterior to the lesion in the portal venous contrast image.

Lesion Characteristic: Washout
First contrast image phase: portal venous
Second contrast image phase: delayed
Inputs to model: first attributes from inner region of the portal venous contrast image; second attributes from region exterior to the lesion in the portal venous contrast image; third attributes from inner region of the delayed contrast image; fourth attributes from region exterior to the lesion in the delayed contrast image.
Lesion Characteristic: Washout
First contrast image phase: arterial
Second contrast image phase: portal venous
Third contrast image phase: delayed
Inputs to model: first attributes from inner region of the arterial contrast image; second attributes from region exterior to the lesion in the arterial contrast image; third attributes from inner region of the portal venous contrast image; fourth attributes from region exterior to the lesion in the portal venous contrast image; seventh attributes from inner region of the delayed contrast image; eight attributes from region exterior to the lesion in the delayed contrast image.
Lesion Characteristic: Capsule
First contrast image phase: portal venous
Second contrast image phase: delayed
Inputs to model: first attributes from inner region of the portal venous contrast image; second attributes from region exterior to the lesion in the portal venous contrast image; third attributes from inner region of the delayed contrast image; fourth attributes from region exterior to the lesion in the delayed contrast image; fifth attributes from a boundary region in the portal venous contrast image; and sixth attributes from a boundary region in the delayed contrast image.

In some embodiments, the attributes comprise an Energy, Interquartile Range, Kurtosis, Maximum Diameter, Mesh Volume, Minor Axis Length, and/or Sphericity for each respective region listed above.

The skilled person will appreciate that these combinations of input parameters are examples only and that different combinations of contrast images and regions may be selected to identify other lesion characteristics. Other characteristics include, but are not limited to: Non enhancing capsule, Nodule in nodule architecture, mosaic architecture, fat in mass (more than adjacent liver).

Turning back now to Fig. 2 and the method 200, following performance of step 206, the indication(s) may be used to determine a LI-RADS score for the lesion. For example, the method 200 may comprise determining a Liver Imaging Reporting and Data System, LI-RADS score for the lesion from (e.g. the presence or absence) of the one or more characteristics. In order to determine the LI-RADS score, the diameter of the lesion may also be determined and the LI-RADS score may also be determined based on the diameter. Determination of the LI-RADS score from the diameter of the lesion, and presence/absence of the lesion characteristics washout, capsule and APHE is described in "The LI-RADS® v2018 Manual" by Bashir et al. 2018 issued by the American College of Radiology (ACR).

Turning now to Fig. 11, which shows a method of determining a LI-RADS score from Arterial Phase, Portal Venous Phase and Delayed Phase CT contrast images of a liver lesion according to some embodiments herein. The method in Fig. 11 incorporates the method 200 described above as follows:

1102: Lesion detection is performed by segmenting a Portal Venous phase contrast image.

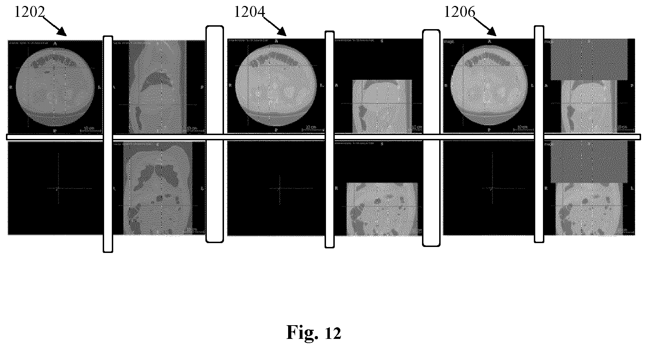

1104&1110: Registration. The Arterial Phase and Delay phases are registered onto the Portal Venous phase image. This is illustrated in Fig. 12 which shows three CT slices in a Portal Venous Contrast Image 1202 and the same images in the Arterial Contrast before registration 1204 and post-registration 1206. The alignment enables common inner regions, regions exterior to the region and boundary regions of a lesion therein to be easily determined across the Arterial and Portal Venous Images.

1106: Following Registration, the legions are aligned across the different contrast image phases. A criteria for correspondence may be defined, for example, two lesions from different phases may be said to correspond if the lesion masks in the respective lesion spatially overlap with 25% or more pixels.

1108: Determine an indication of whether the lesion characteristic APHE is present by performing method 200 with the first contrast image being the arterial phase image and using a first model to determine whether the lesion has APHE. In this step, the first model takes as input first attributes from an inner region of the Arterial phase image and second attribute from a region exterior to the lesion in the Arterial phase image, as described above, and outputs an indication of whether the lesion characteristic APHE is present. The largest diameter of the legion is also computed in the Arterial Phase contrast image.

1112: Determine an indication of whether the lesion characteristic "Capsule" is present by performing method 200 with the first contrast image being the portal Venous phase image and the second contrast image being the delayed phase image and using a second model to determine whether the lesion has a capsule. The second model takes as input first attributes from an inner region of the Portal Venous phase image, second attribute from a region exterior to the lesion in the portal venous phase image, third attributes from an inner region of the delayed phase image, fourth attributes from a region exterior to the lesion in the delayed phase image, fifth attributes of a boundary region of the lesion in the portal venous phase image; and sixth attributes of a boundary region of the lesion in the delayed phase image, as described above, and outputs an indication of whether the lesion characteristic "Capsule" is present.

1114: Determine an indication of whether the lesion characteristic "Washout" is present by performing method 200 with the first contrast image being the portal Venous phase image and the second contrast image being the delayed phase image and using a third model to determine whether the lesion has a capsule. The third model takes as input first attributes from an inner region of the Portal Venous phase image, second attribute from a region exterior to the lesion in the portal venous phase image, third attributes from an inner region of the delayed phase image, and fourth attributes from a region exterior to the lesion in the delayed phase image, as described above, and outputs an indication of whether the lesion characteristic "Washout" is present.

1116: Generate LI-RADS score using indications of whether APHE, Washout and Capsule are present, in addition to the maximum diameter and look up table from the LI-RADS guidelines cited above.

In this way, the method 200 above can be incorporated into a pipeline for automated LI-RADS score assessment.

The skilled person will appreciate that this is merely an example and that the steps of the method 1100 may be performed in a different order, or in a different combination of steps to that that shown in Fig. 11. Furthermore, different combinations of contrast images may be used to those illustrated in the steps therein.

Turning now to other embodiments, in another embodiment, there is provided a computer program product comprising a computer readable medium, the computer readable medium having computer readable code embodied therein, the computer readable code being configured such that, on execution by a suitable computer or processor, the computer or processor is caused to perform the method or methods described herein.

Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1.  A method of determining whether a liver lesion has one or more lesion characteristics, from a first contrast image of the liver, the method comprising:

    determining first attributes in an inner region of the lesion in the first contrast image;
    determining second attributes in a region exterior to the lesion in the first contrast image; and
    using a model trained using a machine learning process to obtain an indication of whether the lesion has the one or more lesion characteristics, based on the first attributes and the second attributes.

2.  A method as in claim 1 wherein the first attributes and the second attributes are statistical measures or radiomics features of intensity values of pixels or voxels in the respective regions.

3.  A method as in claim 2 wherein the first attributes and the second attributes comprise: an Energy, Interquartile Range, Kurtosis, Maximum Diameter, Mesh Volume, Minor Axis Length, and/or Sphericity of the respective region.

4.  A method as in claim 1, 2, or 3 wherein the lesion characteristics are: hyper-enhancement, hypo-enhancement, a capsule, and/or washout.

5.  A method as in any one of the preceding claims further comprising:

    determining third attributes in an inner region of the lesion in a second contrast image at a different contrast phase to the first contrast image;
    determining fourth attributes in a region exterior to the lesion in the second contrast image; and
    wherein the step of using a model trained using a machine learning process is further based on the third attributes and the fourth attributes.

6.  A method as in claim 5 wherein the method is for determining whether the lesion has the characteristic of washout, and:

    the first contrast image is an arterial phase image, and the second contrast image is a portal venous image; or

the first contrast image is a portal venous image, and the second contrast image is a delayed image.

7. A method as in claim 5 wherein the method further comprises:

  determining fifth attributes in a boundary region of the lesion in the first contrast image; determining sixth attributes in a boundary region of the lesion in the second contrast image; and wherein the step of using a model trained using a machine learning process is further based on the fifth attributes and the sixth attributes.

8. A method as in claim 7 wherein the method is for determining whether the lesion has a capsule and wherein the first contrast image is a portal venous image, and the second contrast image is a delayed image.

9. A method as in claim 8 wherein the method further comprises:

  transforming the first contrast image and/or the second contrast image by mapping the cartesian co-ordinates of the respective images into polar coordinates so as to convert the circular structure of the lesion into a linearized form in each respective contrast image; and defining the inner region, the region exterior to the lesion and the boundary region with respect to bands visible in the linearized form of the lesion in each respective transformed image.

10. A method as in claim 9 wherein the method further comprises:

  splitting the lesion into circular sectors; and for each circular sector: performing steps i) and ii) for portions of the respective images corresponding to the respective circular segment.

11. A method as in any one of the preceding claims wherein the method is for determining whether the lesion has the characteristic APHE and the first contrast image is an arterial phase image.

12. A method as in any one of the preceding claims further comprising: determining a Liver Imaging Reporting and Data System, LI-RADS score for the lesion from the one or more characteristics.

13. A method of determining whether a lesion has a capsule, from a portal venous contrast image of a liver and a delayed phase contrast image of the liver, the method comprising:

  determining first attributes in an inner region of the lesion in the portal venous contrast image; determining second attributes in a region exterior to the lesion in the portal venous contrast image; determining third attributes in an inner region of the lesion in the delayed phase contrast image; determining fourth attributes in a region exterior to the lesion in the delayed phase contrast image; determining fifth attributes in a boundary region of the lesion in the portal venous contrast image; determining sixth attributes in a boundary region of the lesion in the delayed phase contrast image; and using a model trained using a machine learning process to obtain an indication of whether the lesion has a capsule, based on the first attributes, the second attributes, the third attributes, the fourth attributes, the fifth attributes and the sixth attributes.

14. A computer program product comprising a computer readable medium, the computer readable medium having computer readable code embodied therein, the computer readable code being configured such that, on execution by a suitable computer or processor, the computer or processor is caused to perform the method as claimed in any one of the preceding claims.

15. An apparatus for determining whether a liver lesion has one or more lesion characteristics in a first contrast image of the liver, the apparatus comprising:

  a memory comprising instruction data representing a set of instructions; and a processor configured to communicate with the memory and to execute the set of instructions, wherein the set of instructions, when executed by the processor, cause the processor to:

  determine first attributes in an inner region of the lesion in the first contrast image; determine second attributes in a region exterior to the lesion in the first contrast image; and use a model trained using a machine learning process to obtain an indication of whether the lesion has one or more lesion characteristics, based on the first attributes and the second attributes.

100

Processor 102

Memory 104

Instructions
106

**Fig. 1**

200

202
Determine first attributes in an inner region of the lesion in the first contrast image

204
Determine second attributes in a region exterior to the lesion in the first contrast image

206
Use a model trained using a machine learning process to obtain an indication of whether the lesion has one or more lesion characteristics, based on the first attributes and the second attributes

**Fig. 2**

302

304

306

308

Capsule Mask

Lesion Boundary

In Mask

Out Mask

**Fig. 3**

400

402

Train the model using a machine learning process to predict whether a lesion has one or more lesion characteristics based on first attributes in an inner region of the lesion in the first contrast image and second attributes in a region exterior to the lesion in the first contrast image

**Fig. 4**

**Fig. 5**

**Fig. 6**

Fig. 7

Fig. 8

902   904   906

908

910   912   914

916

**Fig. 9**

1002   K2

K1

d2  d1

Center of mass

**Fig. 10**

**Fig. 11**

Fig. 12

Europäisches
Patentamt
European
Patent Office
Office européen
des brevets

## EUROPEAN SEARCH REPORT

**Application Number**

EP 22 15 2943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SMEETS DIRK ET AL: "Semi-automatic level set segmentation of liver tumors combining a spiral-scanning technique with supervised fuzzy pixel classification", MEDICAL IMAGE ANALYSIS, vol. 14, no. 1, 19 September 2009 (2009-09-19), pages 13-20, XP055934392, GB ISSN: 1361-8415, DOI: 10.1016/j.media.2009.09.002 | 1-11, 13-15 | INV. G06T7/00 |
| Y | * abstract * * sections "1. Introduction", "2. Method", "2.1. Initial segmentation", "2.2. Speed function", "2.4. Initial segmentation using circle-scanning technique", "2.5. Data", "3.2.2. Validation data" * ----- | 12 | |
| X | CHEN JIE-NENG ET AL: "Sequential Learning on Liver Tumor Boundary Semantics and Prognostic Biomarker Mining", 21 September 2021 (2021-09-21), PATTERN RECOGNITION : 5TH ASIAN CONFERENCE, ACPR 2019, AUCKLAND, NEW ZEALAND, NOVEMBER 26-29, 2019, REVISED SELECTED PAPERS, PART II; [LECTURE NOTES IN COMPUTER SCIENCE], SPRINGER INTERNATIONAL PUBLISHING, CHAM, PAGE(S) 764 - 774, XP047622249, ISSN: 0302-9743 ISBN: 978-3-030-41298-2 [retrieved on 2021-09-21] | 1-11, 13-15 | TECHNICAL FIELDS SEARCHED (IPC)  G06T |
| Y | * abstract * * sections "1 Introduction", "2.1 Tumor Boundary Spatial Localization", "2.2 Deep Sequential Learning on Tumor Semantics", "3 Experiments and Discussion" * ----- | 12 | |

-/--

The present search report has been drawn up for all claims

| Place of search | Date of completion of the search | Examiner |
|---|---|---|
| Munich | 22 June 2022 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SANTILLAN CYNTHIA ET AL: "LI-RADS major features: CT, MRI with extracellular agents, and MRI with hepatobiliary agents", ABDOMINAL RADIOLOGY, SPRINGER US, NEW YORK, vol. 43, no. 1, 21 August 2017 (2017-08-21), pages 75-81, XP036390252, ISSN: 2366-004X, DOI: 10.1007/S00261-017-1291-4 [retrieved on 2017-08-21] * abstract * ----- | 12 | |

|  | | | TECHNICAL FIELDS SEARCHED (IPC) |
|---|---|---|---|

The present search report has been drawn up for all claims

| Place of search | Date of completion of the search | Examiner |
|---|---|---|
| Munich | 22 June 2022 | Eckert, Lars |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHERNYAK V ; SANTILLAN CS ; PAPADATOS D.** LI-RADS® algorithm: CT and MRI. *Abdom Radiol (NY),* 2018, vol. 43 (1), 111-126
- The LI-RADS® v2018 Manual. **BASHIR et al.** the American College of Radiology (ACR). 2018
- **S. MINAEE ; Y. Y. BOYKOV ; F. PORIKLI ; A. J. PLAZA ; N. KEHTARNAVAZ ; D. TERZOPOULOS.** Image Segmentation Using Deep Learning: A Survey. *IEEE Transactions on Pattern Analysis and Machine Intelligence*
- **PEDREGOSA et al.** Scikit-learn: Machine Learning in Python. *JMLR,* 2011, vol. 12, 2825-2830